# EUROPEAN PATENT SPECIFICATION

(11) **EP 3 506 584 B1**
(45) Date of publication and mention of the grant of the patent: **23.12.2020**
(21) Application number: 17210897.9
(22) Date of filing: 28.12.2017
(51) Int. Cl.: H04L 29/06, H04L 12/417, H04L 29/08, G06F 13/37

(54) **METHOD AND APPARATUS FOR COMMUNICATION BETWEEN A PLURALITY OF CONTROL BOARDS**
VERFAHREN UND VORRICHTUNG ZUR KOMMUNIKATION ZWISCHEN MEHREREN STEUERPLATINEN
PROCÉDÉ ET APPAREIL POUR UNE COMMUNICATION ENTRE UNE PLURALITÉ DE CARTES DE COMMANDE

(43) Date of publication of application: 03.07.2019
(73) Proprietor: Vestel Elektronik Sanayi ve Ticaret A.S., 45030 Manisa (TR)
(72) Inventor: AYTAÇ, Cihat, 45030 Manisa (TR); ATALAY, Koray, 45030 Manisa (TR)
(74) Representative: Flint, Adam

(56) References cited:
- EP-A2- 0 612 169
- US-A- 4 590 468
- US-A- 5 329 528
- INTERNATIONAL ORGANIZATION FOR STANDARDIZATION: "INFORMATION PROCESSING SYSTEMS-LOCAL AREA NETWORKS-PART 4:TOKEN-PASSING BUS ACCESS METHOD AND PHYSICAL LAYER SPECIFICATIONS", INTERNET CITATION, 19 July 1990 (1990-07-19), XP002437887, Retrieved from the Internet: URL:http://pddocserv/specdocs/data/standar ds/telecom/IEEE-standards/reading/ieee/std /lanman/restricted/8802-4-1990.pdf [retrieved on 2007-06-15]

## Description

### Technical Field

The present disclosure relates to a method and apparatus for communication between a plurality of control boards

### Background

There are many situations in which there are a plurality of control boards which, to a degree at least, are dependent on each other. In general, the control boards may be distributed across a number of devices or apparatus or may be located in and be part of a single device or apparatus.

As some specific examples, many consumer items or appliances have a number of control boards. Such appliances include for example "white goods" such as a washing machine, a tumble dryer, a combined washing machine and tumble dryer, a dishwasher, a refrigeration apparatus such as a fridge or freezer or combined fridge-freezer, etc., and electronic devices such as a television set, a DVD player, Blu Ray player, a set-top box, a desktop or laptop or tablet computer, etc., a video game console, a cellular phone (including a so-called "smart phone"), a printer, etc. The different control boards control different aspects/components of the apparatus.

Conventionally there is a single "master" control board which has overall control of all of the control boards. In general, the master sends instructions and data to the other control boards and receives responses and data from the other control boards.

EP0612169A2 discloses a data transmission system for a vehicle which includes a plurality of control systems installed on the vehicle and a network bus connecting the plurality of control systems with each other for circulating a transmission right through the plurality of control systems to thereby perform transmission of a message between the plurality of control systems. Each of the control systems starts transmitting data when it is detected that the transmission right is not generated or lost from the system, and continues transmitting the data when there is no collision of data transmitted from the present control system with data transmitted from the rest of the plurality of control systems, or when by mediation for avoiding the collision is detected it is determined to continue data transmission. The maximum number of times of retransmission to be permitted is determined according to a type of failure in transmission identified, and the retransmission is performed so long as the number times of retransmission of the data does not exceed the maximum number of times of retransmission to be permitted. The message comprises a first response field for receiving a first acknowledging response output from a control system having received the transmission right, and a second response field for receiving a second acknowledging response output from a control system having received data.

### Summary

According to a first aspect disclosed herein, there is provided a method of communication of data between a plurality of control boards, the method comprising:
(A) a control board transmitting a data frame for receipt by at least some of the other control boards, the data frame comprising (i) an address of the transmitting control board, (ii) an indication of the next control board that is intended to transmit a data frame, (iii) a data package intended for one or more of the control boards and (iv) the address of the or each control board intended to receive said data package;
(B) if the next control board that is intended to transmit a data frame as indicated in the data frame correctly receives the data frame, then said next control board transmits an acknowledgement of receipt of said data package for receipt by the transmitting control board and becomes the next control board that is to transmit a data frame and the method proceeding to (D);
(C) otherwise, if the control board transmitting the data frame does not receive an acknowledgement of receipt of said data frame from the next control board that is intended to transmit a data frame within a predetermined period, then the control board transmitting the data frame transmits a data frame for receipt by at least some of the other control boards, said data frame comprising an indication of another next control board that is intended to transmit a data frame, and the method returning to (B);
(D) the next control board that is to transmit a data frame transmitting a data frame for receipt by at least some of the other control boards, the data frame comprising (i) an address of the transmitting control board, (ii) an indication of the next control board that is intended to transmit a data frame, (iii) a data package intended for one or more of the control boards and (iv) the address of the or each control board intended to receive the data package;
   wherein before (D), any of said at least some of the other control boards that has received a data package in the data frame that is intended for that control board transmitting an acknowledgement of receipt of said data package for receipt by at least the next control board that is to transmit a data frame; and
   wherein in (D) the data frame that is transmitted by the next control board does not include any data package addressed to any other control board for which acknowledgement of receipt of the data package that was intended for that control board has been received by the next control board, and the data frame that is transmitted by the next control board does include a data package intended for a control board for which acknowledgement of receipt of the data package that was intended for that control board has not been received by the next control board.

This avoids the need for one of the control boards to be a "master". This can simplify the arrangement of the control boards. This also means that a system or apparatus including the control boards will not "hang" or "freeze" simply because some master control board malfunctions or does not receive data frames correctly for some reason. It also reduces the amount of data that is transferred and the signalling involved in prior art systems where one master control board has frequent communications back and forth with a number of subsidiary control boards. This in turn can reduce errors that can arise during data transfer. The timing of data transfer is not dependent on a master control board and so data transfer can occur more rapidly.

After (D), the method may stop or may repeat (by returning to (A)) as necessary.

In (D) (iii), data that was previously sent in a data frame by a previous control board for another control board and that has been acknowledged as received by that other control board is not resent to that other control board. If a data package was intended for several control boards and not all of them have acknowledged receipt, then the data frame that is sent by the next control board includes the data and, for that data, the address of the or each control board that has not acknowledged receipt. The next control board that is transmitting a data frame may add its own (new) data that is intended for another control board.

In an example, the control boards are all provided in a single apparatus.

The apparatus may be for example a consumer item. For example the apparatus may be a "white goods" item such as a washing machine, a tumble dryer, a combined washing machine and tumble dryer, a dishwasher, a refrigeration apparatus such as a fridge or freezer or combined fridge-freezer, etc. The apparatus may be for example a television set, a DVD player, Blu Ray player, a set-top box, a desktop or laptop or tablet computer, etc., a video game console, a cellular phone (including a so-called "smart phone"), a printer, etc. The apparatus may be or be part of for example a vehicle control device, a security system, an IoT (Internet of Things) device or network of IoT devices.

In an example, the control boards are all connected to the same bus.

In an example, the data frames include one or more of a start block, a continue block and stop block.

In an example, the method comprises in (A) and in (D) the control board transmitting a data frame for receipt by each of the other control boards.

According to a second aspect disclosed herein, there is provided apparatus comprising a plurality of control boards, the control boards being configured to carry out a method comprising:
(A) a control board transmitting a data frame for receipt by at least some of the other control boards, the data frame comprising (i) an address of the transmitting control board, (ii) an indication of the next control board that is intended to transmit a data frame, (iii) a data package intended for one or more of the control boards and (iv) the address of the or each control board intended to receive said data package;
(B) if the next control board that is intended to transmit a data frame as indicated in the data frame correctly receives the data frame, then said next control board transmits an acknowledgement of receipt of said data package for receipt by the transmitting control board and becomes the next control board that is to transmit a data frame and the method proceeding to (D);
(C) otherwise, if the control board transmitting the data frame does not receive an acknowledgement of receipt of said data frame from the next control board that is intended to transmit a data frame within a predetermined period, then the control board transmitting the data frame transmits a data frame for receipt by at least some of the other control boards, said data frame comprising an indication of another next control board that is intended to transmit a data frame, and the method returning to (B);
(D) the next control board that is to transmit a data frame transmitting a data frame for receipt by at least some of the other control boards, the data frame comprising (i) an address of the transmitting control board, (ii) an indication of the next control board that is intended to transmit a data frame, (iii) a data package intended for one or more of the control boards and (iv) the address of the or each control board intended to receive the data package;
   wherein before (D), any of said at least some of the other control boards that has received a data package in the data frame that is intended for that control board transmitting an acknowledgement of receipt of said data package for receipt by at least the next control board that is to transmit a data frame; and
   wherein in (D) the data frame that is transmitted by the next control board does not include any data package addressed to any other control board for which acknowledgement of receipt of the data package that was intended for that control board has been received by the next control board, and the data frame that is transmitted by the next control board does include a data package intended for a control board for which acknowledgement of receipt of the data package that was intended for that control board has not been received by the next control board.

There may be provided a computer program comprising instructions such that when the computer program is executed by control boards, the control boards carry out a method as described above. There may be provided a computer-readable storage medium storing a computer program as described above.

### Brief Description of the Drawings

To assist understanding of the present disclosure and to show how embodiments may be put into effect, reference is made by way of example to the accompanying drawings in which:
Figure 1 shows schematically an example of an apparatus having a plurality of control boards; and
Figures 2 to 11 show schematically examples of data frames for use in communicating between control boards.

### Detailed Description

As mentioned, many consumer items or appliances have a number of control boards. As some specific examples, such appliances include for example "white goods" such as a washing machine, a tumble dryer, a combined washing machine and tumble dryer, a dishwasher, a refrigeration apparatus such as a fridge or freezer or combined fridge-freezer, etc., and electronic devices such as a television set, a DVD player, Blu Ray player, a set-top box, a desktop or laptop or tablet computer, etc., a video game console, a cellular phone (including a so-called "smart phone"), a printer, etc. A control board typically has a printed circuit board on which is mounted a processor, such as a central processing unit, and often also volatile memory (such as RAM) and sometimes non-volatile data storage. The different control boards control different aspects/components of the apparatus.

Conventionally there is a single "master" control board which has overall control of all of the control boards. In general, the master sends instructions and data to the other control boards and receives responses and data from the other control boards.

As a specific example to illustrate this, conventionally, in for example a refrigerator, a main controller board may interface with an icemaker, one or more temperature controllers, one or more displays or other human-machine interface, quick chill compartments, etc., as well as a number of fans, motors, and other active components of the refrigerator. Each of these peripheral devices may have a separate control board which is responsive to commands from the main controller and which feeds back data or other signals to the main controller.

As another example, conventionally, in a washing machine, a master control board MB stores in a memory different types of washing programs depending on the type and colour of the textiles and a washing program and temperatures, etc., as selected by a user typically from one of several pre-programmed and selectable options. A first auxiliary or slave control board CB1 may have functions such as starting up a synchronous electric motor mechanically coupled to the washing drum, controlling the direction of rotation and controlling the speed of rotation of the drum. Another auxiliary or slave control board CB2 may have functions to (1) intake detergents and other chemicals from specified compartments, (2) activate valves and water level detectors to intake fresh water, (3) switch on electrical water heaters, and (4) activate pumps and other valves to drain out water.

To illustrate this further, in very simple terms a conventional washing machine may operate as follows:
Wetting:
   1) Master control board (MB) receives selection by the end-user from preloaded programs for the type of the textile the end-user intends to wash. The water temperature and rotor/drum speed are set based on the colour and textile type.
   2) MB sends data to CB2 to intake water until a predetermined level is reached. MB again sends data to CB2 to heat the water in the washing machine up to a predetermined temperature.
   3) MB sends data to CB1 to drive the synchronous electric motor at a pre-defined low speed.
Washing:
   4) MB sends data to CB2 to intake detergents and other chemicals.
   5) MB sends data to CB1 to revolve the drum periodically in clockwise and anticlockwise directions at predefined intervals. For example: clockwise - stop temporarily - counter-clockwise - stop temporarily - clockwise - stop temporarily - etc...
Rinsing:
   6) MB sends data to CB2 to drain out water.
   7) MB sends data to CB2 to intake clean water up to a predefined level.
   8) MB sends data to CB1 to revolve the synchronous electric motor at a predefined low speed for a predefined time interval.
Spinning:
   9) MB sends data to CB2 to drain out water.
   10) MB sends data to CB1 to revolve the drum slowly.
   11) MB receives data from tachometer of the synchronous motor to determine if the textile inside the chamber is distributed uniformly. If data received from tachometer of the electric motor indicates that textile in the chamber is uniformly distributed, then MB sends data to CB1 to revolve the drum at a higher speed to perform the spinning process. If data received from tachometer indicates unbalanced distribution of the textile in the chamber, then MB returns to step 10.

As can be seen, a relatively large amount of data and instructions are sent from the MB to the control boards CB1, CB2 and vice versa. Moreover, the correct operation of one control board CB1 depends not only on the correct operation of the other control board CB2 but also on CB2 receiving its own instructions from MB correctly and CB2 reporting back correctly to the MB, as well as CB1 receiving its own instructions from MB correctly. For example:
1) The washing machine cannot move to step 4 from step 3 without MB taking data from CB1 and sending data to CB2 to intake detergents and other chemicals.
2) The washing machine cannot move to step 5 from step 4 without MB taking data from CB2 and sending data to CB1 to revolve the drum.
3) The washing machine cannot move to step 6 from step 5 automatically. CB 1 cannot initiate the process of draining out the water.

As another specific example, if the data transfer between the MB and tachometer or the data transfer between MB and CB 1 is corrupted, than hazardous conditions are likely to occur since the drum may be driven to revolve at a high speed under unbalanced distribution of the textiles inside the drum.

Other problems with this conventional master-slave arrangement is that the auxiliary or slave control boards cannot directly communicate amongst each other without involvement of the master control board. This can delay the response time of the overall system to rapid changes in outputs of sensors, detectors, A/D converters, keypads which are connected to the slave control boards, etc. Moreover, the slave control boards can only perform repetitive functions and cannot automatically cause initiation of a new function or a process in another control board without the involvement of the master control board. In addition, the high intensity of data transfer between the master control board and the slave control boards is a known cause of failures in accurate data transfer. (This is a particular problem in consumer items for which the manufacturing costs must be kept low, which requires that the components used have a relatively low or modest specification.) Last, point-to-point wiring of the master control board to each of the auxiliary or slave control boards can quickly become unmanageable and expensive.

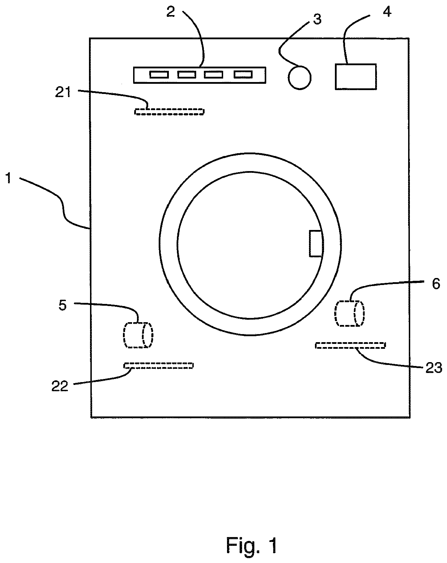

Referring now to Figure 1, this shows schematically a washing machine 1 as an example of an apparatus having a plurality of control boards according to the present disclosure. (It is emphasised that the washing machine is just one example, and that the disclosure herein may be applied to other apparatus and appliances.) The washing machine 1 has a control panel 2 with a number of buttons which allow a user to set for example the temperature of the wash, the spin speed used during spinning, etc. The washing machine 1 has a rotary control knob 3 to allow a user to select from a number of preset washing programs (for example, for cottons or synthetics wash, rinse and spin/drain, spin/drain only, etc.). A first control board 21 is associated with the control panel 2 and control knob 3. The washing machine 1 further has a detergent inlet compartment 4 in which a user may load detergent, etc. The washing machine 1 has a motor 5 for rotating the drum of the washing machine and a pump 6 for draining water from the drum. Respective control boards 22, 23 are provided for the motor 5 and the pump 6. There may be other components and other control boards not illustrated or described here. The control boards 20, 21, 22 can all communicate with each other, for example by being connected to the same shared bus (not shown) using wired connections, though wireless connections may alternatively or additionally be used.

Other appliances, as discussed above by way of example, similarly have a number of control boards for controlling the operation of one or more components of the appliance, as will be well understood.

In use in accordance with the present disclosure, at least some of the control boards are able to communicate directly with each other, and no control board is designated as or operates as a "master" having overall control of the other control boards.

In an example of a method of operation:
at (A) a control board transmits a data frame for receipt by at least some of the other control boards. The data frame comprises (i) an address of the transmitting control board, (ii) an indication of the next control board that is intended to transmit a data frame, (iii) a data package intended for one or more of the control boards and (iv) the address of the or each control board intended to receive said data package;
at (B), if the next control board that is intended to transmit a data frame as indicated in the data frame correctly receives the data frame, then that next control board transmits an acknowledgement of receipt of the data package for receipt by the transmitting control board; that next control board then becomes the next control board that is to transmit a data frame and the method proceeds to (D) below;
otherwise, at (C), if the (first) control board transmitting the data frame does not receive an acknowledgement of receipt of the data frame from the next control board that is intended to transmit a data frame within a predetermined period, then the (first) control board transmitting the data frame transmits a data frame for receipt by at least some of the other control boards. That (new) data frame comprises an indication of another next control board that is intended to transmit a data frame. The method then returns to (B);
at (D) the next control board that is to transmit a data frame transmits a data frame for receipt by at least some of the other control boards. The data frame comprises (i) an address of the transmitting control board, (ii) an indication of the next control board that is intended to transmit a data frame, (iii) a data package intended for one or more of the control boards and (iv) the address of the or each control board intended to receive the data package.

In this way, the control boards can communicate directly with each other, in the sense that no control board needs to be designated as a master. The control boards can pass data packages (which term as used herein may include data, instructions, acknowledgements, etc.) to each other, at the same time designating the next control board that is to transmit a data frame. The data frame sent by successive control boards is modified to remove (or, equivalently, constructed not to include) data packages that have already been acknowledged as received by the or each intended recipient control board. If a data package in the original data frame was intended for more than one control board and not all of those control boards have acknowledged receipt, then the data frame sent by successive control boards includes for that data package addresses of control boards that have not have acknowledged receipt (and, for that data package, the data frame sent by successive control boards does not include the addresses of control boards that have acknowledged receipt of that data package). The data frame sent by successive control boards may include a (new) data package which the transmitting may need to pass onto another control board. In a typical implementation, only one control board will be transmitting a data frame at any particular time. The default order in which control boards are selected for transmitting the data frames in sequence may be predetermined and stored in some local data storage in each control board.

As mentioned, this can simplify the arrangement of the control boards. This also means that a system or apparatus including the control boards will not "hang" or "freeze" simply because some master control board malfunctions or does not receive data frames correctly for some reason. It also reduces the amount of data that is transferred and the signalling that is involved in prior art systems where one master control board has frequent communications back and forth with a number of subsidiary control boards. This in turn can reduce errors that can arise during data transfer. The timing of data transfer is not dependent on a master control board and so data transfer can occur more rapidly.

After (D), the method may stop or may repeat (by returning to (A)) as necessary.

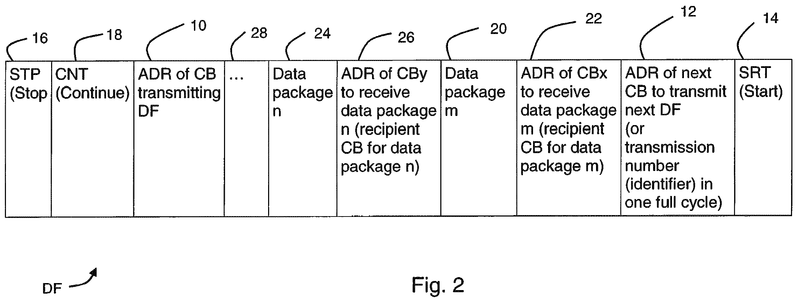

To illustrate this further, an example of an operation method will be described with reference to examples of data frames illustrated schematically in Figures 2 to 11.

A control board wanting to send data to another control board constructs a data frame (DF) to be transmitted. An example of a suitable data frame DF is illustrated schematically in Figure 2. The data frame DF contains at least data blocks for the (network) address of the control board that is transmitting the data frame 10 and an indication of the next control board that is intended to transmit the next data frame 12. The indication of the next control board that is intended to transmit the next data frame may be the address of that next control board. The sequence or order of the control boards to transmit data frames may be preset, and stored in data storage of the control boards. As an alternative to specifying the address of the next control board that is intended to transmit the next data frame in the data frame DF, the number in a sequence of transmissions may be indicated at 12 in the data frame DF. That is, there is stored in data storage of the control boards a sequence for the control boards to transmit data frames in a cycle of transmissions, such that say one particular control board is the first to transmit in a cycle of transmissions, another particular control board is the second to transmit in a cycle of transmissions, etc. As another alternative for the indication of the next control board that is intended to transmit the next data frame, it may be sufficient to rely on the address of the control board that is transmitting the data frame DF (as indicated at 10) and a receiving control board can look up from the stored sequence of control boards for transmission whether or not it is the control board that is intended to transmit the next data frame. That is, the address of the control board that is transmitting the data frame DF may be regarded as an implicit indication of the next control board that is intended to transmit the next data frame.

The data frame DF may also include a start (SRT) block 14, a stop (STP) block 16 and a continue (CNT) block 18. The SRT block 14 and STP block 16 indicate the start and stop of the data frame DF respectively. The CNT block 18 is an optional data block that may be used to indicate that no more data or addresses of recipient control boards are in the DF. This is not essential, but may be helpful when the DF does not include a data package to be transmitted,

The data frame DF may also include a data package or "payloads" for data, signals, instructions, etc. that is to be transmitted from one control board to another. (For simplicity, this will often be referred to herein as "data", it being understood that this includes data, signals, instructions, etc.) As will become clear, this may include data that is generated by the control board that is transmitting the data frame DF. This may also include data that is generated by some other control board and which has been received by the current transmitting control board and which is to be sent on to the next control board (which is repeated until the data ultimately arrives at its intended destination control board).

This is illustrated in Figure 2 explicitly for two data packages for two different control boards. The data frame DF includes a data package m 20 and the address 22 of the control board CBx that is intended to receive the data package m, a second data package n 24 and the address 26 of the control board CBy that is intended to receive the data package n. There may be further data packages intended for those or other control boards, and the addresses of any such other control boards, as indicated by the ellipsis (three dots) 28. Moreover, some data packages may be intended for more than one control board, and so there may be plural address blocks, with addresses for different intended recipient control boards, for one or more data packages.

In operation, in an example, the transfer of data between the control boards may proceed as follows.
1) One of the control boards CBa is assigned as the first control board to initiate data transfer in the system. CBa will be the first control board to transmit a data frame DF after software initialisation of the system. One of the control boards CBz is assigned as the last control board to receive a data frame in the system. As CBz is transmitting a data frame it may indicate in the data frame CBa (the first control board in the sequence) or CBz-1 (the prior control board in the sequence) as the next control board to transmit a data frame.
2) The sequence in which the control boards (CBa to CBz) in the system transmit data frames (or, at least, are intended to transmit data frames) is predetermined.
3) After any control board (for example CBa+1) transmits a data frame onto the bus addressing the next control board (in this example CBa+2) intended to transmit the next data frame, CBa+1 and CBa+2 get into an acknowledgment protocol to confirm that CBa+2 has received the data frame accurately and completely from CBa+1. If CBa+2 has received the data frame accurately and completely from CBa+1, then CBa+2 becomes the next control board to transmit a data frame. If CBa+1 does not receive an acknowledgment signal from CBa+2 confirming that CBa+2 has received the data frame accurately and completely from CBa+1 within a predetermined time period, then the system (here, in particular CBa+1) will dismiss CBa+2; CBa+1 will construct a new data frame in which CBa+3 is indicated as the next control board intended to transmit a data frame and transmits that updated data frame for receipt by CBa+3. The predetermined time period for this purpose should be long enough to allow for a complete data transfer even if for example there are transient spikes in the data bus connecting the control boards.
   (For completeness, it is noted here that CBa+2 will become the next control board to transmit a data frame if CBa+2 has correctly received the data frame from CBa+1. On the other hand, CBa+1 will transmit a new data frame identifying the next control board (here CBa+3) as the next control board intended to transmit a data frame if CBa+1 has not received an acknowledgement from CBa+2. In principle, it is possible that CBa+2 will transmit an acknowledgement but this is not received by CBa+1. In practice however this is unlikely as the acknowledgement data packet is small and very likely to be delivered correctly, especially in comparison to the (potentially quite large) data frames.)
4) When a data frame DF is transmitted onto the bus, it is received by (or at least is intended to be received by) all of the control boards connected to the bus. Any control board that is indicated in the data frame DF as a recipient for data in the data frame DF and that has received the data frame accurately and completely transmits an acknowledgment onto the bus. The acknowledgment is received by (or at least is intended to be received by) all of the control boards connected to the bus. A significant point here is that the next control board that is intended to transmit a data frame (here, CBa+2 say) receives these acknowledgements and so can construct the new (next) data frame that is to be transmitted by CBa+2.

In an example, the next control board to transmit (again, here, CBa+2) which has received the data frame DF from the transmitting control board (here, CBa+1) awaits acknowledgments from each of the control boards addressed in the data frame as recipients of data packages, the acknowledgements being sent by the control boards in a predetermined sequence to avoid conflict. The next control board to transmit (here, CBa+2) may wait for acknowledgements from the other control boards for a predetermined time period. This time period (for waiting for acknowledgements from the other control boards that they have received the data frame when they were addressed in the data frame because there is data in the data frame intended for them) may be shorter than the time period mentioned above (for a transmitting control board to wait for an acknowledgement of receipt of the data frame sent by the next control board intended to transmit a data frame). This is because failure of a control board to receive a data frame when they were addressed in the data frame is dealt with as mentioned above, in particular when a new data frame is sent and that new data frame includes the data for that recipient control board.
5) CBa+2 then constructs a new data frame (or, equivalently, rearranges the data frame) as follows before next transmission:
   5.1 Indicate CBa+3 as the next control board to transmit a data frame.
   5.2 Indicate CBa+2 as the control board transmitting the data frame.
   5.3 If any data is to be transferred from CBa+2, include the addresses of the intended recipient control boards and the corresponding data blocks into the data frame to be transmitted.
   5.4 For any control boards addressed in the data frame DF that was received from CBa+1 and that have provided acknowledgment messages which are received by CBa+2 that they have received the complete data blocks addressed to them in the data frame DF, such data blocks and/or the addresses of those acknowledging control boards are not included in the new data frame (or, equivalently, are removed from the data frame DF for the next transmission by CBa+2.
   5.5 For any control boards addressed in the data frame DF that was received from CBa+1 and that have NOT provided acknowledgment messages which are received by CBa+2 that they have received the complete data blocks addressed to them in the data frame DF, such data blocks and the addresses of those non-acknowledging control boards are added to the new data frame (or, equivalently, are retained in the data frame for the next transmission by CBa+2).
6) CBa+2 transmits the new/re-arranged data frame.
7) If the last control board of the sequence in the cycle (here, CBz) is transmitting the data frame, it will indicate either CBa or CBz-1 as the next control board to transmit a data frame.

It may be noted that in this example, if a data frame contains no data blocks to be transmitted, it will still have a minimum of SRT, STP, ADDRESS of the next control board to transmit a data frame and the ADDRESS of the control board transmitting the data frame. This is necessary to maintain the continuation of data transfer sequence.

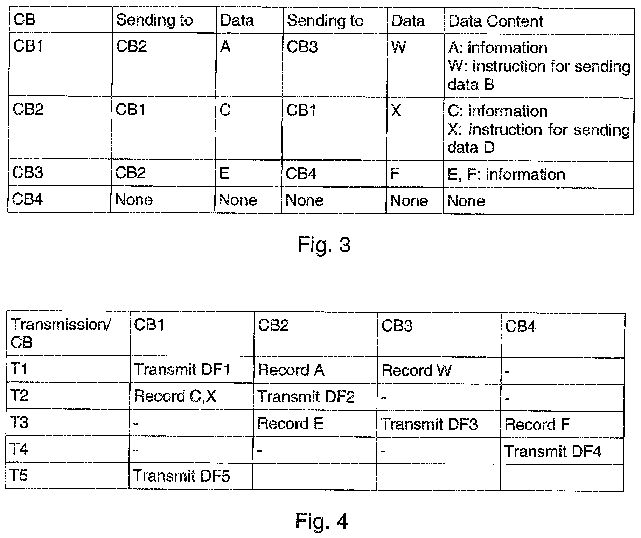

Referring particularly to Figures 3 to 11, examples of data frames in a data transmission sequence will be discussed to illustrate this further.

Referring first to Figure 3, the system has four control boards CB1 - CB4. The table of Figure 3 shows that, at this time instant, CB1 has data A to send to CB2 and data W to send to CB3. For the content of the data, A may be for example information and W may be for example an instruction for CB3 to send data B. Similarly, CB2 has data C to send to CB1 and data X to send to CB1. For the content of the data, C may be for example information and X may be for example an instruction for CB1 to send data D. Similarly, CB3 has data E to send to CB2 and data F to send to CB4. E and F are both information in this example. CB4 has no data to send. (In some examples, the same data may be needed to be sent to more than one control board.)

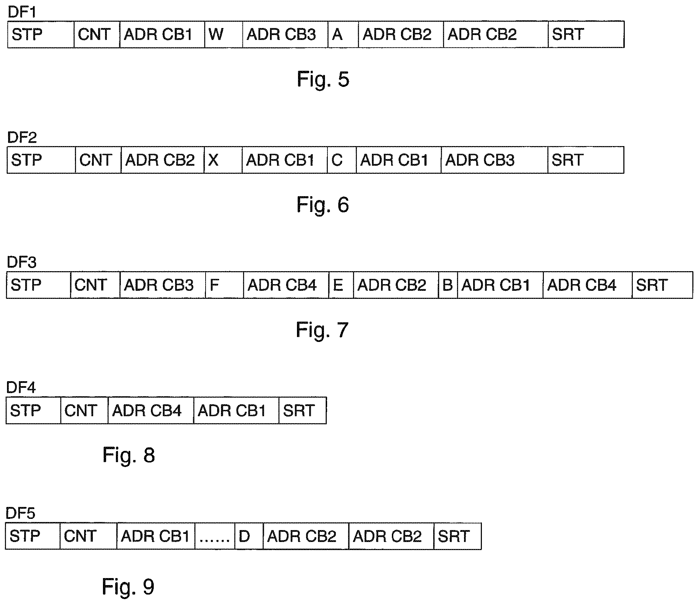

Referring next to Figures 4 to 9, at the first point T1 in the sequence of transmissions, CB1 transmits the first data frame DF1 (see Figure 5); CB2 receives the data frame DF1 and records the data A intended for CB2; CB3 receives the data frame DF1 and records the data W intended for CB3.

At the next point T2 in the sequence of transmissions, CB2 transmits a new data frame DF2 (see Figure 6); CB1 receives the data frame DF2 and records the data C and X intended for CB1.

At the next point T3 in the sequence of transmissions, CB3 transmits a new data frame DF3 (see Figure 7); CB2 receives the data frame DF3 and records the data E; CB4 receives the data frame DF3 and records the data F.

At the next point T4 in the sequence of transmissions, CB4 transmits a new data frame DF4 (see Figure 8). CB4 has no data to transmit in this example at this point.

At the next point T5 in the sequence of transmissions, which in this example has now cycled back to CB1 transmitting data frames, CB1 transmits a new data frame DF5 (see Figure 9). This contains data D for CB2 and data for other control boards (not indicated).

The sequence can then continue cycling through the control boards as necessary, with new data frames being constructed and transmitted as necessary.

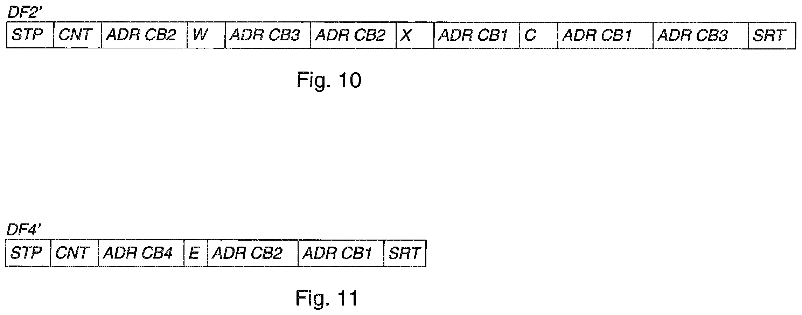

Referring to Figure 10, if for example CB3 has not provided an acknowledgement of receipt of the data W in DF1 that was intended for CB3 when DF1 was transmitted by CB1, then the data frame *DF2'* that is transmitted by CB2 contains that data W and the address of CB3 (as well as the other data and addresses for recipient control boards discussed above).

Likewise, referring to Figure 11, if for example CB2 has not provided an acknowledgement of receipt of the data E in DF3 that was intended for CB2 when DF3 was transmitted by CB3, then the data frame *DF4'* that is transmitted by CB4 contains that date E and the address of CB2. (In this example, it is recalled that there is no other data to be transmitted by DF4 at this point, as mentioned above.)

It will be understood that the processor or processing system or circuitry referred to herein may in practice be provided by a single chip or integrated circuit or plural chips or integrated circuits, optionally provided as a chipset, an application-specific integrated circuit (ASIC), field-programmable gate array (FPGA), digital signal processor (DSP), graphics processing units (GPUs), etc. The chip or chips may comprise circuitry (as well as possibly firmware) for embodying at least one or more of a data processor or processors, a digital signal processor or processors, baseband circuitry and radio frequency circuitry, which are configurable so as to operate in accordance with the exemplary embodiments. In this regard, the exemplary embodiments may be implemented at least in part by computer software stored in (non-transitory) memory and executable by the processor, or by hardware, or by a combination of tangibly stored software and hardware (and tangibly stored firmware).

Reference is made herein to data storage for storing data. This may be provided by a single device or by plural devices. Suitable devices include for example a hard disk and non-volatile semiconductor memory.

Although at least some aspects of the embodiments described herein with reference to the drawings comprise computer processes performed in processing systems or processors, the invention also extends to computer programs, particularly computer programs on or in a carrier, adapted for putting the invention into practice. The program may be in the form of non-transitory source code, object code, a code intermediate source and object code such as in partially compiled form, or in any other non-transitory form suitable for use in the implementation of processes according to the invention. The carrier may be any entity or device capable of carrying the program. For example, the carrier may comprise a storage medium, such as a solid-state drive (SSD) or other semiconductor-based RAM; a ROM, for example a CD ROM or a semiconductor ROM; a magnetic recording medium, for example a floppy disk or hard disk; optical memory devices in general; etc.

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. The scope of the invention is defined by the appended claims.

## Claims

1. A method of communication of data between a plurality of control boards (21, 22, 23), the method comprising:
(A) a control board (21, 22, 23) transmitting a data frame (DF) for receipt by at least some of the other control boards (21, 22, 23), the data frame (DF) comprising (i) an address of the transmitting control board (21, 22, 23), (ii) an indication of the next control board (21, 22, 23) that is intended to transmit a data frame (DF), (iii) a data package intended for one or more of the control boards (21, 22, 23) and (iv) the address of the or each control board (21, 22, 23) intended to receive said data package;
(B) if the next control board (21, 22, 23) that is intended to transmit a data frame (DF) as indicated in the data frame (DF) correctly receives the data frame (DF), then said next control board (21, 22, 23) transmits an acknowledgement of receipt of said data package for receipt by the transmitting control board (21, 22, 23) and becomes the next control board (21, 22, 23) that is to transmit a data frame (DF) and the method proceeding to (D);
(C) otherwise, if the control board (21, 22, 23) transmitting the data frame (DF) does not receive an acknowledgement of receipt of said data frame (DF) from the next control board (21, 22, 23) that is intended to transmit a data frame (DF) within a predetermined period, then the control board (21, 22, 23) transmitting the data frame (DF) transmits a data frame (DF) for receipt by at least some of the other control boards (21, 22, 23), said data frame (DF) comprising an indication of another next control board (21, 22, 23) that is intended to transmit a data frame (DF), and the method returning to (B);
(D) the next control board (21, 22, 23) that is to transmit a data frame (DF) transmitting a data frame (DF) for receipt by at least some of the other control boards (21, 22, 23), the data frame (DF) comprising (i) an address of the transmitting control board (21, 22, 23), (ii) an indication of the next control board (21, 22, 23) that is intended to transmit a data frame (DF), (iii) a data package intended for one or more of the control board (21, 22, 23)s and (iv) the address of the or each control board (21, 22, 23) intended to receive the data package;
wherein before (D), any of said at least some of the other control boards (21, 22, 23) that has received a data package in the data frame (DF) that is intended for that control board (21, 22, 23) transmitting an acknowledgement of receipt of said data package for receipt by at least the next control board (21, 22, 23) that is to transmit a data frame (DF); and
wherein in (D) the data frame (DF) that is transmitted by the next control board (21, 22, 23) does not include any data package addressed to any other control board (21, 22, 23) for which acknowledgement of receipt of the data package that was intended for that control board (21, 22, 23) has been received by the next control board (21, 22, 23), and the data frame (DF) that is transmitted by the next control board (21, 22, 23) does include a data package intended for a control board (21, 22, 23) for which acknowledgement of receipt of the data package that was intended for that control board (21, 22, 23) has not been received by the next control board (21, 22, 23).

2. A method according to claim 1, wherein the control boards (21, 22, 23) are all provided in a single apparatus (1).

3. A method according to claim 1 or claim 2, wherein the control boards (21, 22, 23) are all connected to the same bus.

4. A method according to any of claims 1 to 3, wherein the data frames (DF) include one or more of a start block, a continue block and stop block.

5. A method according to any of claims 1 to 4, comprising in (A) and in (D) the control board (21, 22, 23) transmitting a data frame (DF) for receipt by each of the other control boards (21, 22, 23).

6. Apparatus (1) comprising a plurality of control boards (21, 22, 23), the control boards (21, 22, 23) being configured to carry out a method comprising:
(A) a control board (21, 22, 23) transmitting a data frame (DF) for receipt by at least some of the other control boards (21, 22, 23), the data frame (DF) comprising (i) an address of the transmitting control board (21, 22, 23), (ii) an indication of the next control board (21, 22, 23) that is intended to transmit a data frame (DF), (iii) a data package intended for one or more of the control boards (21, 22, 23) and (iv) the address of the or each control board (21, 22, 23) intended to receive said data package;
(B) if the next control board (21, 22, 23) that is intended to transmit a data frame (DF) as indicated in the data frame (DF) correctly receives the data frame (DF), then said next control board (21, 22, 23) transmits an acknowledgement of receipt of said data package for receipt by the transmitting control board (21, 22, 23) and becomes the next control board (21, 22, 23) that is to transmit a data frame (DF) and the method proceeding to (D);
(C) otherwise, if the control board (21, 22, 23) transmitting the data frame (DF) does not receive an acknowledgement of receipt of said data frame (DF) from the next control board (21, 22, 23) that is intended to transmit a data frame (DF) within a predetermined period, then the control board (21, 22, 23) transmitting the data frame (DF) transmits a data frame (DF) for receipt by at least some of the other control boards (21, 22, 23), said data frame (DF) comprising an indication of another next control board (21, 22, 23) that is intended to transmit a data frame (DF), and the method returning to (B);
(D) the next control board (21, 22, 23) that is to transmit a data frame (DF) transmitting a data frame (DF) for receipt by at least some of the other control boards (21, 22, 23), the data frame (DF) comprising (i) an address of the transmitting control board (21, 22, 23), (ii) an indication of the next control board (21, 22, 23) that is intended to transmit a data frame (DF), (iii) a data package intended for one or more of the control boards (21, 22, 23) and (iv) the address of the or each control board (21, 22, 23) intended to receive the data package;
wherein before (D), any of said at least some of the other control boards (21, 22, 23) that has received a data package in the data frame (DF) that is intended for that control board (21, 22, 23) transmitting an acknowledgement of receipt of said data package for receipt by at least the next control board (21, 22, 23) that is to transmit a data frame (DF); and
wherein in (D) the data frame (DF) that is transmitted by the next control board (21, 22, 23) does not include any data package addressed to any other control board (21, 22, 23) for which acknowledgement of receipt of the data package that was intended for that control board (21, 22, 23) has been received by the next control board (21, 22, 23), and the data frame (DF) that is transmitted by the next control board (21, 22, 23) does include a data package intended for a control board (21, 22, 23) for which acknowledgement of receipt of the data package that was intended for that control board (21, 22, 23) has not been received by the next control board (21, 22, 23).

7. Apparatus (1) according to claim 6, wherein the control boards (21, 22, 23) are all provided in a single apparatus (1).

8. Apparatus (1) according to claim 6 or claim 7, wherein the control boards (21, 22, 23) are all connected to the same bus.

9. Apparatus (1) according to any of claims 6 to 8, configured such that the data frames (DF) include one or more of a start block, a continue block and stop block.

10. Apparatus (1) according to any of claims 6 to 9, the control boards (21, 22, 23) being configured to carry out a method comprising: in (A) and in (D) the control board (21, 22, 23) transmitting a data frame (DF) for receipt by each of the other control boards (21, 22, 23).

11. A computer program comprising instructions such that when the computer program is executed by control boards (21, 22, 23), the control boards (21, 22, 23) carry out a method according to any of claims 1 to 5.

## Patentansprüche

1. Verfahren zur Datenkommunikation zwischen mehreren Steuerplatinen (21, 22, 23), wobei das Verfahren aufweist:
(A) eine Steuerplatine (21, 22, 23) sendet einen Datenrahmen (DF) zum Empfang durch wenigstens manche der anderen Steuerplatinen (21, 22, 23), wobei der Datenrahmen (DF) (i) eine Adresse der sendenden Steuerplatine (21, 22, 23), (ii) eine Angabe der nächsten Steuerplatine (21, 22, 23), die einen Datenrahmen (DF) senden soll, (iii) ein für eine oder mehr der Steuerplatinen (21, 22, 23) bestimmtes Datenpaket und (iv) die Adresse der oder jeder Steuerplatine (21, 22, 23), die das Datenpaket empfangen soll(en), aufweist;
(B) falls die nächste Steuerplatine (21, 22, 23), die einen Datenrahmen (DF) senden soll, wie im Datenrahmen (DF) angegeben, den Datenrahmen (DF) korrekt empfängt, dann die nächste Steuerplatine (21, 22, 23) eine Empfangsbestätigung des Datenpakets zum Empfang durch die sendende Steuerplatine (21, 22, 23) sendet und zur nächsten Steuerplatine (21, 22, 23) wird, die einen Datenrahmen (DF) senden soll, und das Verfahren zu (D) fortschreitet;
(C) andernfalls, falls die den Datenrahmen (DF) sendende Steuerplatine (21, 22, 23) innerhalb einer vorbestimmten Frist keine Empfangsbestätigung des Datenrahmens (DF) von der nächsten Steuerplatine (21, 22, 23) empfängt, die einen Datenrahmen senden soll, dann die den Datenrahmen (DF) sendende Steuerplatine (21, 22, 23) einen Datenrahmen (DF) zum Empfang durch wenigstens manche der anderen Steuerplatinen (21, 22, 23) sendet, wobei der Datenrahmen (DF) eine Angabe einer anderen nächsten Steuerplatine (21, 22, 23) aufweist, die einen Datenrahmen (DF) senden soll, und das Verfahren zu (B) zurückkehrt;
(D) die nächste Steuerplatine (21, 22, 23), die einen Datenrahmen (DF) senden soll, einen Datenrahmen (DF) zum Empfang durch wenigstens manche der anderen Steuerplatinen (21, 22, 23) sendet, wobei der Datenrahmen (DF) (i) eine Adresse der sendenden Steuerplatine (21, 22, 23), (ii) eine Angabe der nächsten Steuerplatine (21, 22, 23), die einen Datenrahmen (DF) senden soll, (iii) ein für eine oder mehr der Steuerplatinen (21, 22, 23) bestimmtes Datenpaket und (iv) die Adresse der oder jeder Steuerplatine (21, 22, 23), die das Datenpaket empfangen soll(en), aufweist;
wobei vor (D) eine der wenigstens manchen anderen Steuerplatinen (21, 22, 23), die ein Datenpaket im Datenrahmen (DF) empfangen hat, das für diese Steuerplatine (21, 22, 23) bestimmt ist, eine Empfangsbestätigung des Datenpakets zum Empfang durch wenigstens die nächste Steuerplatine (21, 22, 23), die einen Datenrahmen (DF) senden soll, sendet; und
wobei in (D) der Datenrahmen (DF), der von der nächsten Steuerplatine (21, 22, 23) gesendet wird, kein Datenpaket enthält, das an eine andere Steuerplatine (21, 22, 23) adressiert ist, für die eine Empfangsbestätigung des Datenpakets, das für diese Steuerplatine (21, 22, 23) bestimmt war, von der nächsten Steuerplatine (21, 22, 23) empfangen wurde, und der Datenrahmen (DF), der von der nächsten Steuerplatine (21, 22, 23) gesendet wird, ein Datenpaket enthält, das für eine Steuerplatine (21, 22, 23) bestimmt ist, für die keine Empfangsbestätigung des Datenpakets, das für diese Steuerplatine (21, 22, 23) bestimmt war, von der nächsten Steuerplatine (21, 22, 23) empfangen wurde.

2. Verfahren nach Anspruch 1, bei welchem die Steuerplatinen (21, 22, 23) alle in einer einzigen Vorrichtung (1) vorgesehen sind.

3. Verfahren nach Anspruch 1 oder Anspruch 2, bei welchem die Steuerplatinen (21, 22, 23) alle mit demselben Bus verbunden sind.

4. Verfahren nach einem der Ansprüche 1 bis 3, bei welchem die Datenrahmen (DF) ein oder mehr Elemente von einem Anfangsblock, einem Fortführblock und einem Schlussblock enthalten.

5. Verfahren nach einem der Ansprüche 1 bis 4, aufweisend in (A) und in (D), dass die Steuerplatine (21, 22, 23) einen Datenrahmen (DF) zum Empfang durch jede der anderen Steuerplatinen (21, 22, 23) sendet.

6. Vorrichtung (1) mit mehreren Steuerplatinen (21, 22, 23), wobei die Steuerplatinen (21, 22, 23) konfiguriert sind, um ein Verfahren auszuführen, das aufweist:
(A) eine Steuerplatine (21, 22, 23) sendet einen Datenrahmen (DF) zum Empfang durch wenigstens manche der anderen Steuerplatinen (21, 22, 23), wobei der Datenrahmen (DF) (i) eine Adresse der sendenden Steuerplatine (21, 22, 23), (ii) eine Angabe der nächsten Steuerplatine (21, 22, 23), die einen Datenrahmen (DF) senden soll, (iii) ein für eine oder mehr der Steuerplatinen (21, 22, 23) bestimmtes Datenpaket und (iv) die Adresse der oder jeder Steuerplatine (21, 22, 23), die das Datenpaket empfangen soll(en), aufweist;
(B) falls die nächste Steuerplatine (21, 22, 23), die einen Datenrahmen (DF) senden soll, wie im Datenrahmen (DF) angegeben, den Datenrahmen (DF) korrekt empfängt, dann die nächste Steuerplatine (21, 22, 23) eine Empfangsbestätigung des Datenpakets zum Empfang durch die sendende Steuerplatine (21, 22, 23) sendet und zur nächsten Steuerplatine (21, 22, 23) wird, die einen Datenrahmen (DF) senden soll, und das Verfahren zu (D) fortschreitet;
(C) andernfalls, falls die den Datenrahmen (DF) sendende Steuerplatine (21, 22, 23) innerhalb einer vorbestimmten Frist keine Empfangsbestätigung des Datenrahmens (DF) von der nächsten Steuerplatine (21, 22, 23) empfängt, die einen Datenrahmen senden soll, dann die den Datenrahmen (DF) sendende Steuerplatine (21, 22, 23) einen Datenrahmen (DF) zum Empfang durch wenigstens manche der anderen Steuerplatinen (21, 22, 23) sendet, wobei der Datenrahmen (DF) eine Angabe einer anderen nächsten Steuerplatine (21, 22, 23) aufweist, die einen Datenrahmen (DF) senden soll, und das Verfahren zu (B) zurückkehrt;
(D) die nächste Steuerplatine (21, 22, 23), die einen Datenrahmen (DF) senden soll, einen Datenrahmen (DF) zum Empfang durch wenigstens manche der anderen Steuerplatinen (21, 22, 23) sendet, wobei der Datenrahmen (DF) (i) eine Adresse der sendenden Steuerplatine (21, 22, 23), (ii) eine Angabe der nächsten Steuerplatine (21, 22, 23), die einen Datenrahmen (DF) senden soll, (iii) ein für eine oder mehr der Steuerplatinen (21, 22, 23) bestimmtes Datenpaket und (iv) die Adresse der oder jeder Steuerplatine (21, 22, 23), die das Datenpaket empfangen soll(en), aufweist;
wobei vor (D) eine der wenigstens manchen anderen Steuerplatinen (21, 22, 23), die ein Datenpaket im Datenrahmen (DF) empfangen hat, das für diese Steuerplatine (21, 22, 23) bestimmt ist, eine Empfangsbestätigung des Datenpakets zum Empfang durch wenigstens die nächste Steuerplatine (21, 22, 23), die einen Datenrahmen (DF) senden soll, sendet; und
wobei in (D) der Datenrahmen (DF), der von der nächsten Steuerplatine (21, 22, 23) gesendet wird, kein Datenpaket enthält, das an eine andere Steuerplatine (21, 22, 23) adressiert ist, für die eine Empfangsbestätigung des Datenpakets, das für diese Steuerplatine (21, 22, 23) bestimmt war, von der nächsten Steuerplatine (21, 22, 23) empfangen wurde, und der Datenrahmen (DF), der von der nächsten Steuerplatine (21, 22, 23) gesendet wird, ein Datenpaket enthält, das für eine Steuerplatine (21, 22, 23) bestimmt ist, für die keine Empfangsbestätigung des Datenpakets, das für diese Steuerplatine (21, 22, 23) bestimmt war, von der nächsten Steuerplatine (21, 22, 23) empfangen wurde.

7. Vorrichtung (1) nach Anspruch 6, bei welcher die Steuerplatinen (21, 22, 23) alle in einer einzigen Vorrichtung (1) vorgesehen sind.

8. Vorrichtung (1) nach Anspruch 6 oder Anspruch 7, bei welcher die Steuerplatinen (21, 22, 23) alle mit demselben Bus verbunden sind.

9. Vorrichtung (1) nach einem der Ansprüche 6 bis 8, welche so konfiguriert ist, dass die Datenrahmen (DF) ein oder mehr Elemente von einem Anfangsblock, einem Fortführblock und einem Schlussblock enthalten.

10. Vorrichtung (1) nach einem der Ansprüche 6 bis 9, bei welcher die Steuerplatinen konfiguriert sind, um ein Verfahren auszuführen, das in (A) und in (D) aufweist, dass die Steuerplatine (21, 22, 23) einen Datenrahmen (DF) zum Empfang durch jede der anderen Steuerplatinen (21, 22, 23) sendet.

11. Computerprogramm mit Anweisungen derart, dass, wenn das Computerprogramm von Steuerplatinen (21, 22, 23) ausgeführt wird, die Steuerplatinen (21, 22, 23) ein Verfahren nach einem der Ansprüche 1 bis 5 ausführen.

## Revendications

1. Procédé de communication de données entre une pluralité de cartes de commande (21, 22, 23), le procédé comprenant :
(A) une carte de commande (21, 22, 23) qui transmet une trame de données (DF) à des fins de réception par au moins certaines des autres cartes de commande (21, 22, 23), la trame de données (DF) comprenant (i) une adresse de la carte de commande qui transmet (21, 22, 23), (ii) une indication de la carte de commande suivante (21, 22, 23) qui est destinée à transmettre une trame de données (DF), (iii) un paquet de données qui est destiné à l'une ou plusieurs des cartes de commande (21, 22, 23), et (iv) l'adresse de ladite ou de chaque carte de commande (21, 22, 23) qui est destinée à recevoir ledit paquet de données ;
(B) si la carte de commande suivante (21, 22, 23) qui est destinée à transmettre une trame de données (DF) comme indiqué dans la trame de données (DF), reçoit correctement la trame de données (DF), alors ladite carte de commande suivante (21, 22, 23) transmet un accusé de réception dudit paquet de données à des fins de réception par la carte de commande qui transmet (21, 22, 23) et devient la carte de commande suivante (21, 22, 23) qui doit transmettre une trame de données (DF), et le procédé passe à (D) ;
(C) sinon, si la carte de commande (21, 22, 23) qui transmet la trame de données (DF) ne reçoit pas un accusé de réception de ladite trame de données (DF) provenant de la carte de commande suivante (21, 22, 23) qui est destinée à transmettre une trame de données (DF) pendant une période prédéterminée, alors la carte de commande (21, 22, 23) qui transmet la trame de données (DF) transmet une trame de données (DF) à des fins de réception par au moins certaines des autres cartes de commande (21, 22, 23), ladite trame de données (DF) comprenant une indication d'une autre carte de commande suivante (21, 22, 23) qui est destinée à transmettre une trame de données (DF), et le procédé retourne à (B) ;
(D) la carte de commande suivante (21, 22, 23) qui doit transmettre une trame de données (DF) transmet une trame de données (DF) à des fins de réception par au moins certaines des autres cartes de commande (21, 22, 23), la trame de données (DF) comprenant (i) une adresse de la carte de commande qui transmet (21, 22, 23), (ii) une indication de la carte de commande suivante (21, 22, 23) qui est destinée à transmettre une trame de données (DF), (iii) un paquet de données qui est destiné à l'une ou plusieurs des cartes de commande (21, 22, 23), et (iv) l'adresse de ladite ou de chaque carte de commande (21, 22, 23) qui est destinée à recevoir le paquet de données ;
dans lequel, avant (D), l'une quelconque desdites au moins certaines des autres cartes de commande (21, 22, 23) qui a reçu un paquet de données dans la trame de données (DF) qui est destinée à cette carte de commande (21, 22, 23), transmet un accusé de réception dudit paquet de données à des fins de réception par au moins la carte de commande suivante (21, 22, 23) qui doit transmettre une trame de données (DF) ; et
dans lequel, à (D), la trame de données (DF) qui est transmise par la carte de commande suivante (21, 22, 23) n'inclut aucun paquet de données qui est adressé à toute autre carte de commande (21, 22, 23) pour laquelle un accusé de réception du paquet de données qui était destiné à cette carte de commande (21, 22, 23) a été reçu par la carte de commande suivante (21, 22, 23), et la trame de données (DF) qui est transmise par la carte de commande suivante (21, 22, 23) inclut un paquet de données qui est destiné à une carte de commande (231, 22, 23) pour laquelle un accusé de réception du paquet de données qui était destiné à cette carte de commande (21, 22, 23) n'a pas été reçu par la carte de commande suivante (21, 22, 23).

2. Procédé selon la revendication 1, dans lequel les cartes de commande (21, 22, 23) sont toutes fournies dans un seul appareil (1).

3. Procédé selon la revendication 1 ou 2, dans lequel les cartes de commande (21, 22, 23) sont toutes connectées au même bus.

4. Procédé selon l'une quelconque des revendications 1 à 3, dans lequel les trames de données (DF) comprennent l'un ou plusieurs parmi un bloc de début, un bloc de continuation et un bloc de fin.

5. Procédé selon l'une quelconque des revendications 1 à 4, comprenant à (A) et à (D), la carte de commande (21, 22, 23) qui transmet une trame de données (DF) à des fins de réception par chacune des autres cartes de commande (21, 22, 23).

6. Appareil (1) comprenant une pluralité de cartes de commande (21, 22, 23), les cartes de commande (21, 22, 23) étant configurées pour exécuter un procédé comprenant :
(A) une carte de commande (21, 22, 23) qui transmet une trame de données (DF) à des fins de réception par au moins certaines des autres cartes de commande (21, 22, 23), la trame de données (DF) comprenant (i) une adresse de la carte de commande qui transmet (21, 22, 23), (ii) une indication de la carte de commande suivante (21, 22, 23) qui est destinée à transmettre une trame de données (DF), (iii) un paquet de données qui est destiné à l'une ou plusieurs des cartes de commande (21, 22, 23), et (iv) l'adresse de ladite ou de chaque carte de commande (21, 22, 23) qui est destinée à recevoir ledit paquet de données ;
(B) si la carte de commande suivante (21, 22, 23) qui est destinée à transmettre une trame de données (DF) comme indiqué dans la trame de données (DF), reçoit correctement la trame de données (DF), alors ladite carte de commande suivante (21, 22, 23) transmet un accusé de réception dudit paquet de données à des fins de réception par la carte de commande qui transmet (21, 22, 23) et devient la carte de commande suivante (21, 22, 23) qui doit transmettre une trame de données (DF), et le procédé passe à (D) ;
(C) sinon, si la carte de commande (21, 22, 23) qui transmet la trame de données (DF) ne reçoit pas un accusé de réception de ladite trame de données (DF) provenant de la carte de commande suivante (21, 22, 23) qui est destinée à transmettre une trame de données (DF) pendant une période prédéterminée, alors la carte de commande (21, 22, 23) qui transmet la trame de données (DF) transmet une trame de données (DF) à des fins de réception par au moins certaines des autres cartes de commande (21, 22, 23), ladite trame de données (DF) comprenant une indication d'une autre carte de commande suivante (21, 22, 23) qui est destinée à transmettre une trame de données (DF), et le procédé retourne à (B) ;
(D) la carte de commande suivante (21, 22, 23) qui doit transmettre une trame de données (DF) transmet une trame de données (DF) à des fins de réception par au moins certaines des autres cartes de commande (21, 22, 23), la trame de données (DF) comprenant (i) une adresse de la carte de commande qui transmet (21, 22, 23), (ii) une indication de la carte de commande suivante (21, 22, 23) qui est destinée à transmettre une trame de données (DF), (iii) un paquet de données qui est destiné à l'une ou plusieurs des cartes de commande (21, 22, 23), et (iv) l'adresse de ladite ou de chaque carte de commande (21, 22, 23) qui est destinée à recevoir le paquet de données ;
dans lequel, avant (D), l'une quelconque desdites au moins certaines des autres cartes de commande (21, 22, 23) qui a reçu un paquet de données dans la trame de données (DF) qui est destinée à cette carte de commande (21, 22, 23), transmet un accusé de réception dudit paquet de données à des fins de réception par au moins la carte de commande suivante (21, 22, 23) qui doit transmettre une trame de données (DF) ; et
dans lequel, à (D), la trame de données (DF) qui est transmise par la carte de commande suivante (21, 22, 23) n'inclut aucun paquet de données qui est adressé à toute autre carte de commande (21, 22, 23) pour laquelle un accusé de réception du paquet de données qui était destiné à cette carte de commande (21, 22, 23) a été reçu par la carte de commande suivante (21, 22, 23), et la trame de données (DF) qui est transmise par la carte de commande suivante (21, 22, 23) inclut un paquet de données qui est destiné à une carte de commande (231, 22, 23) pour laquelle un accusé de réception du paquet de données qui était destiné à cette carte de commande (21, 22, 23) n'a pas été reçu par la carte de commande suivante (21, 22, 23).

7. Appareil (1) selon la revendication 6, dans lequel les cartes de commande (21, 22, 23) sont toutes fournies dans un seul appareil (1).

8. Appareil (1) selon la revendication 6 ou 7, dans lequel les cartes de commande (21, 22, 23) sont toutes connectées au même bus.

9. Appareil (1) selon l'une quelconque des revendications 6 à 8, configuré de telle sorte que les trames de données (DF) comprennent l'un ou plusieurs parmi un bloc de début, un bloc de continuation et un bloc de fin.

10. Appareil (1) selon l'une quelconque des revendications 6 à 9, dans lequel les cartes de commande (21, 22, 23) sont configurées pour effectuer un procédé comprenant : à (A) et à (D), la carte de commande (21, 22, 23) qui transmet une trame de données (DF) à des fins de réception par chacune des autres cartes de commande (21, 22, 23).

11. Programme informatique comprenant des instructions de sorte que, lorsque le programme informatique est exécuté par des cartes de commande (21, 22, 23), les cartes de commande (21, 22, 23) effectuent un procédé selon l'une quelconque des revendications 1 à 5.
